(19) Europäisches Patentamt / European Patent Office / Office européen des brevets

(11) **EP 4 343 314 A1**

(12) **EUROPEAN PATENT APPLICATION**

(43) Date of publication:
**27.03.2024   Bulletin 2024/13**

(21) Application number: **23195627.7**

(22) Date of filing: **06.09.2023**

(51) International Patent Classification (IPC):
**G01N 21/89** *(2006.01)*      **G01N 21/88** *(2006.01)*
**G01N 21/3563** *(2014.01)*

(52) Cooperative Patent Classification (CPC):
**G01N 21/8901; G01N 21/8914;** G01N 21/3563;
G01N 2021/8848; G01N 2021/8908

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.09.2022   IT 202200019575**

(71) Applicant: **ITALVISION - S.R.L.**
**42013 Casalgrande (RE) (IT)**

(72) Inventor: **CAPPONI, Marco**
**42122 REGGIO EMILIA (IT)**

(74) Representative: **Corradini, Corrado et al**
**Ing. C. Corradini & C. S.r.l.**
**Via Dante Alighieri 4**
**42121 Reggio Emilia (IT)**

(54)    **DEVICE AND METHOD FOR THE DETECTION OF POLISHING DEFECTS ON A MOVING SLAB**

(57)    A device for the detection of polishing defects on a moving slab comprising:
- a support plane on which at least one slab passes along an advancement direction parallel to the support plane;
- at least one detection apparatus, wherein the detection apparatus is arranged above the support plane, at a non-zero distance therefrom,
wherein
the detection apparatus comprises an LED light source configured to emit a light beam in the infra-red range directed along a prevailing emission direction incident upon the support plane to illuminate at least a portion of a visible surface of the slab in transit across the support plane, and a detection sensor configured to detect an image of the visible surface of a slab in transit across the support plane illuminated by the light source.

FIG.1

EP 4 343 314 A1

**Description**

TECHNICAL FIELD

The present invention relates to a device and method for the measurement of polishing defects, preferably scratches or other surface defects of an aesthetic nature (such as grooves, holes, shadows or the like), on a moving slab, e.g. (on a visible surface of) a ceramic slab (subjected to polishing/lapping on its visible surface).

PRIOR ART

As is well known, ceramic slabs, also known as large format slabs, are generally subjected to grinding, lapping and polishing on the visible surface.
After these surface finishing operations, the slab can be cut into smaller slabs of the desired size for laying tiles.
The presence of surface defects on the slab, e.g. abrasions, scratches, streaks, grooves, holes, shadows or the like, due to imperfect or homogeneous grinding, lapping or polishing or to pre-existing defects in the slab not corrected by lapping/polishing, may reduce the commercially exploitable surface of the slab, hence the number and size of the shapes that can be obtained from the initial cutting of the slab, increasing the amount of waste and the number of square metres of second or third class products.
Therefore, the slab is examined for surface defects prior to cutting to determine the quantity, position and size of the tiles or other pieces that can be cut from the slab in order to minimise waste or second and third class products.
The visual examination of the slabs is an operation that requires experienced and reliable personnel.
In addition, a need perceived in the industry is to be able to have an imperfection check on the entire machined surface and on all the slabs that are processed in-line. Moreover, a need perceived in the industry is to make the slab verification operations more efficient and comprehensive without increasing the costs and time frames for such verification.
In particular, a need perceived in the industry is that of allowing precise and accurate identification of surface defects on the entire visible surface of the slab and, preferably, on all the slabs in the line, i.e. all the slabs in the production line (coming out of the grinding, lapping and/or polishing machine) without necessarily impacting slab production/processing (i.e. without requiring measuring stations that would require the temporary parking of slabs or slowing down the slab advancement line).

DISCLOSURE OF THE INVENTION

An object of the present invention is to satisfy these and other requirements of the prior art, with a simple, rational and low-cost solution.
These objects are achieved by the features of the invention set forth in each independent claim. The dependent claims outline preferred and/or particularly advantageous aspects of the invention.

BRIEF DESCRIPTION OF THE DRAWINGS

Further features and advantages of the invention will be more apparent after reading the following description provided by way of non-limiting example, with the aid of the accompanying drawings.

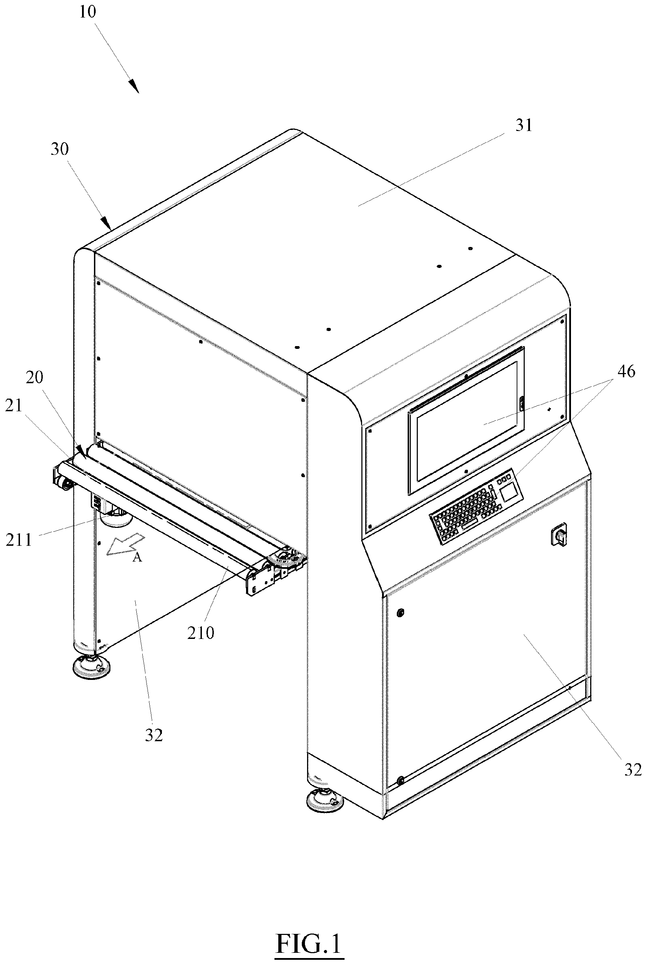

Figure 1 is an axonometric view of a device according to the invention.

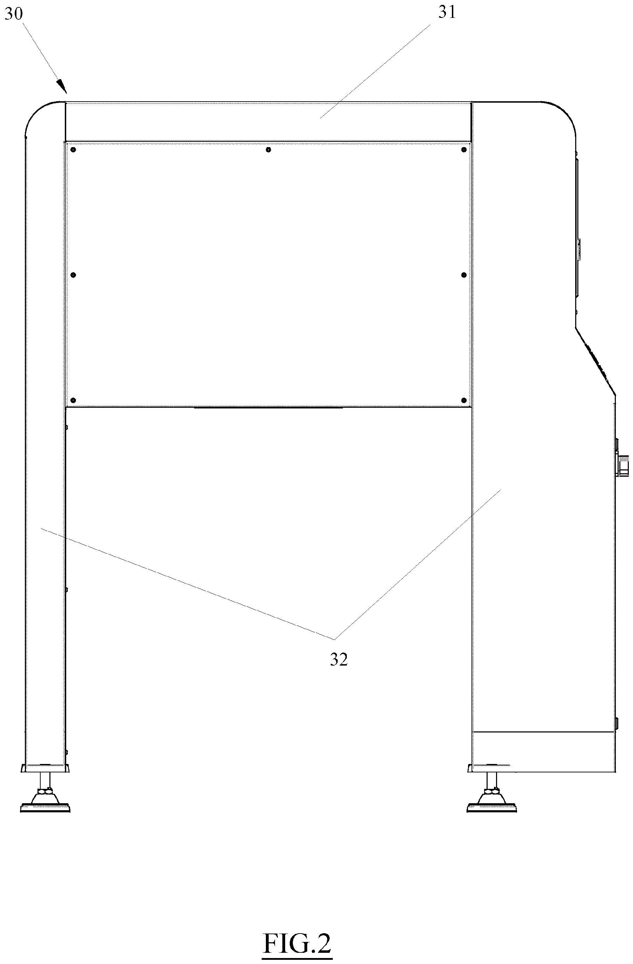

Figure 2 is a front elevation view of a detail of the detection apparatus of the device in Figure 1.

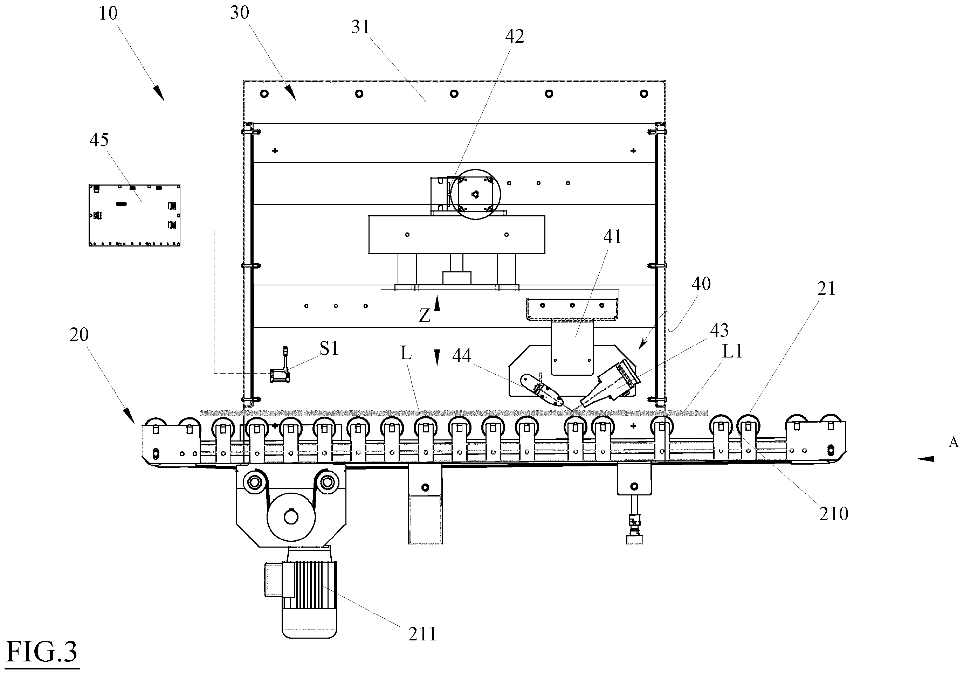

Figure 3 is a sectional view of the device in Figure 1.
Figure 4 is a view of the detail regarding the detection apparatus of the device in Figure 3.

BEST MODE TO IMPLEMENT THE INVENTION

With particular reference to these figures, a device for detecting surface defects on (a visible surface of) a slab L, e.g. a ceramic slab (previously subjected to grinding/lapping and/or polishing), in motion, has been comprehensively referred to as 10.
Surface defects are understood here as scratches, nicks, grooves, holes, depressions, shadows or the like (which can be traced back to the grinding/lapping and/or polishing process or which were pre-existing in the slab and which were not corrected/removed by the grinding/lapping and/or polishing process).
For example, such defects are often caused by poor water quality, any broken abrasive from the grinding/lapping/polishing process, or any piece that has been rounded off or chipped (either top or bottom) leaving residue in the machine, or, finally, a mechanical problem.
The device 10 comprises a support 20 for supporting at least one slab L resting on its own lower (main) support surface, also referred to as the laying surface, opposite the upper surface L1 (main or also referred to as the visible surface) to be checked with the device.
The support 20 comprises a horizontal support plane 21 on which the slabs L are to be placed with their surface L1 to be checked facing upwards.
The support 20 preferably comprises an advancement unit for advancing the slab L supported on the support plane 21 along a predetermined advancement direction A belonging to the support plane 21 (i.e. horizontal), e.g. substantially straight.
In the preferred example shown, the advancement unit comprises a conveyor.
Preferably, but not necessarily, the conveyor is a roller conveyor, in particular, the advancement unit comprises a roller conveyor 210, which generally comprises a plurality of revolving rollers arranged parallel to one other and mutually coplanar to define the aforementioned horizontal support plane 21 on which the slabs L to be analysed rest.

In practice, each roller of the roller conveyor 210 rotates about its own horizontal axis of rotation and perpendicular to the advancement direction A.

The rollers of the roller conveyor 210 are connected to a motor 211, in particular by means of deflection devices such as chains or belts, which motor 211 is adapted to make them rotate on themselves in a synchronous manner so as to advance the slabs L in the aforementioned direction A horizontally (preferably in one direction only).

The rotation speed of the rollers of the roller conveyor 210 regulates the advancement speed of the slabs L along the advancement direction A, which can be set and adjusted according to processing requirements, e.g. it is constant and equal to the advancement speed of the slabs L along the production/processing line.

For example, the (maximum) advancement speed set by the advancement unit is 10 m/sec.

The roller conveyor 210 is equipped with a support frame resting on the ground (not shown, as they are known and common in the industry). Specifically, the roller conveyor is equipped with two side panels that rest on the ground at their lower end and rotatably support the opposite distal ends of the rollers of the roller conveyor 210 at their top. The motor 211 driving the roller conveyor can be placed below the rollers themselves between the two side panels or in another suitable position.

The roller conveyor 210 can have a prevailing dimension parallel to the advancement direction A imposed by the rollers.

The width of the bearing surface 21 is, for example, defined by the length of each roller of the roller conveyor 210.

The advancement unit could alternatively be defined by a belt conveyor or other conveyor of a type known in the sector of conveying slabs L.

A sensor S1 configured to detect a thickness (i.e. the maximum distance between the surface L1 and the support plane 21) of the slab L placed on the support plane 21 is associated with support 20, e.g. with the support plane 21 itself.

The sensor S1 is, for example, placed proximal to the upstream end of the support plane 21 in the advancement sense of the slabs L along the advancement direction A.

For example, the device 10 comprises a support bridge 30 comprising a longitudinal crosspiece 31 extending with its own longitudinal axis parallel to the support plane 21 and orthogonal to the advancement direction.

The cross member 31 is supported in suspension above the support plane 21 (e.g. in a predetermined axial position along the advancement direction A) by a pair of fixed uprights 32, e.g. rigidly connected to the support frame 212 20 and/or provided with support on the ground.

The device 10 further comprises at least one detection apparatus 40 configured to detect a (digital) image of a visible surface L1 of a slab L in transit on the support plane 21, i.e., during the advancement movement on the support plane 21 along the advancement direction A thereof.

The detection apparatus 40, in particular, as will be better described below, is configured/sized to detect an image of the entire surface L1 (both in the direction parallel to the advancement direction A and for the direction orthogonal to the advancement direction A and parallel to the support plane 21).

The detection apparatus 40 is arranged above the support plane 21, at a non-zero distance therefrom, as will be better described below.

For example, the detection apparatus 40 is placed proximal to the downstream end of the support plane in the advancement sense of the slabs L along the advancement direction A, e.g. downstream of the sensor S1 in the advancement sense of the slabs L along the advancement direction A.

The detection apparatus 40 is supported by the crosspiece 31, e.g. underneath it, so that it faces the support plane 21 of the support 20.

Preferably, the detection apparatus 40 is movably connected, preferably, with a single translational degree of freedom to the crosspiece 31, with the possibility to slide along a sliding direction Z orthogonal to the support plane 21 for adjusting the distance between the detection apparatus 40 and the support plane 21 (and thus between the detection apparatus 40 and the surface L1 of the slabs L resting on the support plane 21, depending on the thickness of the slabs L).

In particular, the detection apparatus 40 comprises a frame 41 slidably associated with the crosspiece 31, e.g. by means of a guide that allows the sliding of the frame 41 with respect to the crosspiece 31 along the sliding direction Z.

In addition, the detection apparatus 40 comprises an actuator 42, which is supported by the crosspiece 31 and is configured to move (slide) the frame 41 (and, therefore, the detection apparatus 40) along the sliding direction Z.

The actuator 42 is, for example, a linear actuator, preferably an electric motor equipped with an encoder (and a worm gear system).

The detection apparatus 40 extends along a longitudinal axis parallel to the support plane 21 and is inclined, preferably orthogonal, to the advancement direction A.

Preferably, the detection apparatus 40 has a length substantially equal to the width of the support plane 21 (and/or the maximum width of the slabs L to be processed in the production line or verified with the device 10), as will be better described below.

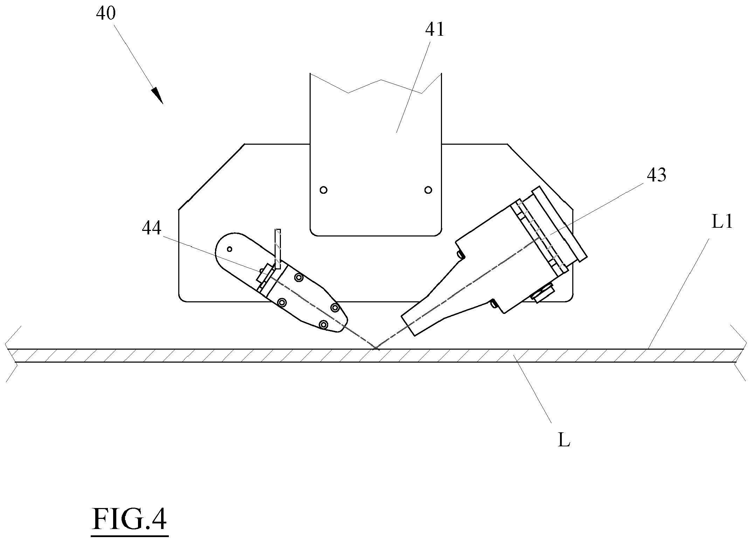

The detection apparatus 40 comprises a light source 43 configured to emit a directed beam of emitted light (illustrated schematically in Figure 4).

Here, a directed beam is understood to mean a beam of light that predominantly extends along a prevailing direction (or axis of the beam).

For example, the light source 43 is of the semiconductor or LED type.

The light source 43 is configured to emit a light beam in the infrared (IR) range, i.e. with a wavelength comprised between 700 nm and 1 mm.

Preferably, the light source 43 is a longitudinal bar having a preferably straight longitudinal axis (emitting the light beam in a radial direction with respect to the longitudinal axis, for the entire length of the light source 43 itself).

The light source 43 has a length substantially equal to the width of the support plane 21 (and/or the maximum width of the slabs L to be processed in the production line or verified with the device 10), so that the emitted light beam can strike a full width of the slab L in transit across the support plane 21.

The light source 43 is configured to emit the light beam so that it is directed towards the support plane 21 at a predetermined angle of inclination with respect to the support plane 21.

The predetermined angle of inclination is, for example, a function of the material of which the (surface L1 of the) slab L is made.

Specifically, this predetermined angle of inclination is Brewster's angle $\theta_B$ (or angle of polarisation) for the given material of which the surface L1 of the slab L) is made, i.e., the angle such that if the wave strikes a surface at precisely this angle $\theta_B$, the reflected wave is polarised perpendicular to the plane of propagation.

Specifically, the light beam is directed along a prevailing emission direction incident upon the support plane 21 and inclined with respect to the support plane by an acute angle, preferably comprised between 30° and 40° (depending on the material of which the surface L1 of the slab L is made).

For example, for a ceramic slab (i.e. a ceramic surface L1), the predetermined angle of inclination (or Brewster angle $\theta_B$) is (approximately) equal to 34°. The central plane of the emitted light beam defines an emission path of the light beam emitted by the light source 43 to the surface L1 of the slab L (in transit below the measuring apparatus 40).

In practice, the light source 43 illuminates a portion (or full-width band) of surface L1 as it advances along the advancement direction A.

Preferably, the light source 43 is fixed to the frame 41 (and movable therewith along the sliding direction Z).

In the example, the light source 43 is configured to direct the light beam emitted anteriorly (or concordantly) in the advancement sense of the slabs L along the advancement direction A.

For example, the light source 43 may comprise a collimator configured to collimate/straighten the emitted light beam and placed in the emission path of the emitted light beam.

The detection apparatus 40 further comprises a detection sensor 44 configured and positioned to detect an image of the (portion or full-width band of) visible surface of a (any) slab L in transit on the support plane 21 and which is illuminated by the light source 43.

The detection sensor 44 is, for example, a (high resolution) optical scanning unit.

The detection sensor 44 has a prevailing optical (detection) plane that extends predominantly along a prevailing direction.

Specifically, the optical plane is incident to the support plane 21 and inclined with respect to the support plane by an acute angle (symmetrical with respect to the acute striking angle of the light beam emitted by the light source 43), preferably comprised between 30° and 40°, e.g. 34° (in the case of ceramics).

The phenomenon of natural polarisation of the (IR) light beam emitted (by the LED-IR light source 43) obtained by positioning (inclined at Brewster's angle $\theta_B$) the light source 43 (and the detection sensor 44) allows an image to be obtained, in which everything lying on the (main) plane of the surface L1 of the slab (i.e. the decoration) is "erased/flattened" in the image (i.e. it does not present the disturbance represented by the decoration, such as printed veins or the like appearing, therefore in the image with uniform (light/grey) colouring (background), while in the image it is represented, with its morphology and/or with different (dark) colouring and chromatically more prominent than the uniform (light/grey) colouring, only any point on the surface L1 of the slab L that does not lie on the (main) plane of the surface L1, e.g. any defect due to a scratch, hole, nick, groove, depression, or any raised part, e.g. due to a speck of dust or drop of dirt or stain or the like).

Preferably, the detection sensor is a so-called contact image sensor (CIS).

Preferably, the detection sensor 44 is defined by a longitudinal bar having a preferably straight longitudinal axis and is directed and positioned so as to be directed (with its own optical plane) in a radial direction with respect to the longitudinal axis, for the entire length thereof.

The detection sensor 44 has a length substantially equal to the width of the support plane 21 (and/or the maximum width of the slabs L to be processed in the production line or verified by the device 10), so as to detect an image (of a strip of the surface L1) over an entire width of the slab L in transit across the support plane 21.

The detection sensor 44 is configured to receive the light beam reflected by the surface L1 of the slab L (wherein the reflected light beam derives from the light beam emitted by the light source 43 as a result of a reflection on the surface L1 of the slab L in transit across the support plane 21).

In the example, the detection sensor 44 is configured to be directed rearwards in the advancement sense of the slabs L along the advancement direction A.

The detection sensor 44 is fixed to the frame 41 and integral with the light source 43 (and movable therewith along the sliding direction Z).

The detection apparatus 40 (i.e., the detection sensor 44) is configured to detect an image of the full-width (illuminated) portion or strip of the surface L1 of the slab L transiting under it, when the detection apparatus 40 (i.e., the detection sensor 44 and/or the light source 43) is arranged at a predetermined (fixed) distance from the surface L1 of the slab L in transit across the support plane 21 (i.e., at a height relative to the support plane 21 that varies depending on the thickness of the slabs L in transit across it).

In practice, the detection apparatus 40 (i.e. the detection sensor 44) is configured to detect an image of the entire (illuminated) surface L1 of the slab L, both in width and length, while the slab L transits underneath it during relative motion between the slab L (in motion on the support plane) and detection apparatus 40).

The measurement apparatus 40 further comprises at least one electronic control unit 45 operatively connected to the detection apparatus 40 (i.e. to the detection sensor 44 thereof).

For example, the electronic control unit 45 is housed inside the (box-shaped body) of the support bridge 30.

The electronic control unit 45 comprises, for example, a processing module, such as a microprocessor or a processor, and a storage module.

The electronic control unit 45 is, for example, connected to a user interface 46 (e.g. fixed to a crosspiece 32 of the support bridge 30), such as a screen and/or terminal or the like, through which a user can enter input values and/or receive information regarding output values transmitted and/or received by the electronic control unit 45.

Alternatively or additionally, the electronic control unit 45 is, for example, connected to one or more further mobile user interfaces (such as tablets or the like), through which a user can enter input values and/or receive information regarding outputs transmitted and/or received by the electronic control unit 45.

The electronic control unit 45 is preferably configured to detect polishing defects on any (and each) slab L in transit across the support plane 21 (and scanned by the detection apparatus 40), e.g. on the entire surface L1 of the slab L.

In particular, the electronic control unit 45, for each slab L, is configured to receive/acquire, from the detection sensor 44 of the detection apparatus 40, as input, an image of the (entire) visible surface L1.

In addition, the electronic control unit 45 is configured to analyse (each) received image, as described below.

In addition, the electronic control unit 45 is configured to identify (at least) one defect, e.g. a defect selected from the group comprising or consisting of scratches, nicks, grooves, holes, depressions, shadows or the like, in the detected image.

For example, the defect is represented in the detected image by one or more pixels or zones having a different colour parameter (e.g. colour or intensity or other) than the background (prevailing colour).

Of the detected defect, the electronic control unit 45 is configured to determine/calculate/measure the shape, size (e.g. one or more of the dimensions from length, width, area or other) and intensity (which is an indicative parameter of the depth/height of the detected defect).

The electronic control unit 45 is, for example, configured to determine a position (on a virtual XY Cartesian system of the image and thus the surface L1 of the slab L) of the detected defect.

Again, the identification step may comprise a step of discriminating/recognising a surface defect, as defined above, of the visible surface L1 of the slab L from any dirt spots or stains deposited on the visible surface L1 of the slab L.

For example, in order to discriminate/recognise defects in the acquired image from dirt spots or stains (which do not produce defects and are correctable), the electronic control unit 45 can be programmed using an artificial intelligence algorithm (e.g. automatic learning or machine learning algorithm).

In more detail, the electronic control unit 45 may be programmed, for example before the first use of the device 10, by means of an initialisation (or learning) cycle.

This initialisation or learning cycle may involve loading various surface images L1 of sample slabs (obtained by means of a detection apparatus 40 similar to or the same as that of the device 10) into the control electronics 45.

For each image, the initialisation or learning cycle then requires the electronic control unit 45 to match each defect or spot of dirt or stain on the sample slab with a certain piece of learning information, e.g. a unique code.

Finally, this initialisation cycle involves storing the information in a dynamic database with the relevant comparison images.

In use, the electronic control unit 45 is, therefore, configured to associate the relevant identification code (saved in the memory unit) with each defect or spot of dirt or stain recognised in the acquired image, allowing it to discriminate between a defect and a spot of dirt or stain.

The electronic control unit 45 is, then, configured to indicate/make available to a display device, i.e. the user interface 46 (or other graphical interface), the detected defect (e.g. enlargeable) and, preferably, its position in the image of the slab L.

For example, in the user interface 46 the images of the slabs L acquired in real time are displayed and defects and their actual position are highlighted on them, e.g. by means of coloured boxes outlining the detected defect.

For example, the electronic control unit 45 may be configured to compare certain dimensional parameters of the detected defect (and only the defect), such as one or more dimensions, area, (chromatic) intensity or other parameters, with respective reference dimensional parameters (such as a predetermined reference dimension, reference area, reference (chromatic) intensity or other), which are stored in the memory of the electronic control unit 45.

If (and only if) the detected defect has a dimensional parameter greater than the respective predetermined dimensional reference parameter, then the electronic control unit 45 is configured to indicate/make available to a display device, i.e. the user interface 46 (or other graphical interface), the detected defect (e.g. by the addition of an alarm signal). For example, in such a case, it is possible to differentiate a reject slab (in which the detected defect is greater than the permitted tolerance) from a correctable slab, i.e. one in which the defect can be corrected/removed by grinding/polishing/lapping.

Again, it is possible that the electronic control unit 45 may provide for counting/determining the recurrence of detected defects that are similar in position and/or type in consecutive slabs.

In such a case, the electronic control unit 45 can be configured to compare the number of occurrences of similar detected defects or the percentage of slabs containing similar defects with a respective reference limit (which can be set and stored in the memory of the electronic control unit 45) and send an alarm signal and/or report the detected defect (if and only if) to the user interface 46 if the number counted/determined is greater than the reference limit (e.g. by adding an alarm signal).

The electronic control unit 45 is preferably configured to perform the surface defect detection on each slab L passing through the support 20 along the advancement direction A.

The possibility to display the detected defects and/or alarm signals at the user interface 46 makes it possible to immediately intercept processing anomalies on the slabs L and alert production line control personnel and/or stop the production line.

Again, the electronic control unit 45 is for example operatively connected to the sensor S1 and (each) actuator 42.

The electronic control unit 45 is, in particular, configured to measure a thickness of the slab L (i.e., to receive from the sensor S1 a signal representative of the thickness of the slab L, i.e., the distance of the surface L1 of the slab L from the support plane 21) and to define a positioning elevation for the detection apparatus 40 (i.e., the detection sensor 44), based on the measured thickness.

For example, the positioning elevation is calculated using the formula:

$$Q = s + k,$$

where Q is the positioning elevation, s is the measured thickness of the slab L resting on the support plane 21 and k is a constant (non-zero), e.g. 15 mm.

Thus, the operation of the device 10 for performing a method for detecting a defect on a surface of a moving slab is essentially as follows.

First, the support 20 is set so that the slabs L can advance on the support plane A at a set (and fixed) speed, e.g. equal to the speed at which the slabs L advance in the processing/production line upstream (and downstream) of the device 10.

Specifically, the motor 211 is commanded to rotate so that the roller conveyor 210 advances the slabs L, along the advancement direction A, at the desired speed.

In practice, the method involves moving the slab on a support plane along an advancement direction parallel to the support plane, e.g. by advancing the slab L on the support plane 21 at a predetermined advancement speed.

When the slab L is at the sensor S1, it detects the thickness of the slab L, i.e. the distance of the surface L1 from the support plane 21.

In practice, the method may involve measuring the thickness of the slab L (and/or the distance of the surface L1 from the support plane 21).

At this point, the electronic control unit 45 sets each detection apparatus 40 to the positioning elevation.

When the slab L is below the detection apparatus 40, the latter is commanded to activate the light source 43 and the detection sensor 44.

Thus, as the surface L1 of the slab L advances on the support plane 21 it is hit by the emitted beam of light (IR) and is "scanned" there by the detection sensor 44.

The images detected by the detection sensor 44 are sent to the electronic control unit 45, which - operating as described above - identifies any defect in the detected image and reports to the user interface 46 (after dimensional and/or recurrence verification) the detected defect and, preferably, its position in the image of the slab L.

The device 10 may be placed downstream of and/or integrated with a device for measuring a parameter indicative of a degree of polishing of a slab (gloss meter), as described in Italian patent application No. 102021000028331 (filed on 08/11/2021) in the name of the same Applicant (and which is incorporated herein by reference).

For example, the device 10 and the device for measuring a parameter indicative of a degree of polishing of a slab may share one or more of the support bridge 30, the support 20, the actuator 42, the sensor S1, the user interfaces 46 and the electronic control unit 45.

The invention thus conceived is susceptible to several modifications and variations, all falling within the scope of the inventive concept.

Moreover, all the details can be replaced by other technically equivalent elements.

In practice, the materials used, as well as the contingent shapes and sizes, can be whatever according to the requirements without for this reason departing from the scope of protection of the following claims.

**Claims**

1. A device for the detection of polishing defects on a moving slab comprising:

   - a support plane on which at least one slab passes along an advancement direction parallel to the support plane;
   - at least one detection apparatus, wherein the detection apparatus is arranged above the support plane, at a non-zero distance therefrom, wherein
   the detection apparatus comprises an LED light source configured to emit a light beam in the infra-red range directed along a prevailing emission direction incident upon the support plane to illuminate at least a portion of a visible surface of the slab in transit across the support plane, and a detection sensor configured to detect an image of the visible surface of a slab in transit across the support plane illuminated by the light source.

2. The device according to claim 1, wherein the detection apparatus is elongated along a longitudinal axis parallel to the support plane and inclined, preferably orthogonal, to the advancement direction, and has a length substantially equal to the width of the support plane, so that the emitted light beam affects an entire width of the slab in transit across the support plane.

3. The device according to the preceding claim, which comprises a support bridge comprising a longitudinal crosspiece extending with its own longitudinal axis parallel to the support plane and to the longitudinal axis of the detection apparatus, wherein the detection apparatus is supported by the longitudinal crosspiece of the support bridge.

4. The device according to claim 1 or 3, wherein the detection apparatus is movable along a sliding direction orthogonal to the support plane for adjusting a distance between the detection apparatus and the support plane.

5. The device according to the preceding claim, further comprising a control and movement assembly of the detection apparatus configured to place the detection apparatus at a predetermined fixed measurement position from the slab in transit on the support plane.

6. The device according to claim 1, further comprising at least one electronic control unit operatively connected to the detection apparatus, wherein the electronic control unit is configured to:

   - detect an image of a visible surface of a slab illuminated by the light source by means of the detection sensor;
   - identify a defect in the detected image; and
   - report the defect detected to a display device and, preferably, its position in the image of the slab, e.g. if the defect detected is greater than a predetermined reference dimension and/or greater than a predetermined reference intensity.

7. The device according to claim 6, wherein the identification step comprises the step of discriminating a surface defect on the visible surface of the slab from any dirt or stains deposited on the visible surface of the slab.

8. The device according to claim 1, wherein the detection sensor is a contact image sensor (CIS).

9. A method for the detection of a surface defect on a moving slab which comprises:

   - moving the slab on a support plane along an advancement direction parallel to the support plane;
   - striking the moving slab with a light beam in the infra-red range emitted by an LED light source, wherein the light beam strikes the support plane;
   - detecting an image of a visible surface of the illuminated and moving slab on the support plane by means of a detection sensor;
   - identifying a defect in the detected image; and
   - reporting the defect detected to a display device and, preferably, its position in the image of the slab, e.g. if the defect detected is greater than a predetermined reference dimension and/or greater than a predetermined reference intensity.

<u>FIG.1</u>

FIG.2

FIG.3

FIG.4

Europäisches
Patentamt
European
Patent Office
Office européen
des brevets

# EUROPEAN SEARCH REPORT

Application Number

**EP 23 19 5627**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/181873 A1 (YAVETS-CHEN YEHUDA [IL] ET AL) 28 July 2011 (2011-07-28) * paragraphs [0003], [0005], [0048], [0054], [0072], [0073], [0090]; claims 1, 3, 15; figures 1-3, 11 * | 1-9 | INV. G01N21/89 G01N21/88 G01N21/3563 |
| X | US 2017/191946 A1 (SMITH MELVYN [GB] ET AL) 6 July 2017 (2017-07-06) * paragraphs [0001] - [0003], [0121]; claims 1, 13; figures 1, 2, 6 * | 1,8,9 | |
| A | IT PI20 070 105 A1 (UNIV PISA) 11 March 2009 (2009-03-11) * paragraph [0080]; figures 1, 4, 8, 10, 11 * | 1-9 | |

TECHNICAL FIELDS
SEARCHED      (IPC)

G01N

The present search report has been drawn up for all claims

| Place of search | Date of completion of the search | Examiner |
|---|---|---|
| Berlin | 28 November 2023 | Koll, Hermann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 5627

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2023

| Patent document cited in search report | | Publication date | Patent family member(s) | | Publication date |
|---|---|---|---|---|---|
| US 2011181873 A1 | | 28-07-2011 | EP | 2335047 A1 | 22-06-2011 |
| | | | US | 2011181873 A1 | 28-07-2011 |
| | | | WO | 2010029549 A1 | 18-03-2010 |
| US 2017191946 A1 | | 06-07-2017 | AU | 2015270240 A1 | 05-01-2017 |
| | | | CA | 2951190 A1 | 10-12-2015 |
| | | | EP | 3152551 A1 | 12-04-2017 |
| | | | GB | 2526866 A | 09-12-2015 |
| | | | US | 2017191946 A1 | 06-07-2017 |
| | | | WO | 2015185935 A1 | 10-12-2015 |
| IT PI20070105 A1 | | 11-03-2009 | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102021000028331

- IT 08112021